Europäisches Patentamt

European Patent Office

Office européen des brevets

(11) Veröffentlichungsnummer : **0 146 848**
**B1**

(12) **EUROPÄISCHE PATENTSCHRIFT**

(19)

(12)

(45) Veröffentlichungstag der Patentschrift :
07.09.88

(21) Anmeldenummer : 84114855.4

(22) Anmeldetag : 06.12.84

(51) Int. Cl.⁴ : **B 60 R   9/12**

(54) Vorrichtung zum Halten von Ski.

(30) Priorität : 09.12.83 DE 3344611

(43) Veröffentlichungstag der Anmeldung :
03.07.85 Patentblatt 85/27

(45) Bekanntmachung des Hinweises auf die Patenterteilung : 07.09.88 Patentblatt 88/36

(84) Benannte Vertragsstaaten :
**AT CH FR IT LI SE**

(56) Entgegenhaltungen :
DE-A- 1 678 268
DE-A- 2 835 734
FR-A- 2 395 863

(73) Patentinhaber : **Heinrich Wunder GmbH & Co. KG**
**Münchener Strasse 80 Postfach 1920**
**D-8060 Dachau (DE)**

(72) Erfinder : **Zoor, Reinhold**
**Hohlenzollernplatz 1**
**D-8000 München 40 (DE)**

(74) Vertreter : **Zmyj, Erwin, Dipl.-Ing.**
**Rosenheimer Strasse 52**
**D-8000 München 80 (DE)**

**Beschreibung**

Die Erfindung bezieht sich auf eine Vorrichtung zum Halten von Skiern auf Dachgepäckträgern von Kraftfahrzeugen mit einem am Dachgepäckträger anzuordnenden einseitig offenen Skigreifer, in dem die eingelegten Skier durch ein im wesentlichen quer zur Einschubrichtung der Skier elastisch wirkendes Andrückstück gehalten sind, wobei der Skigreifer aus einem im wesentlichen starren Grundkörper mit zwei einander gegenüberliegenden Stützbacken besteht und das elastische Andrückstück als Andrückring ausgebildet ist. Eine solche Vorrichtung ist aus dem Dokument FR-A-2 395 865 bekannt.

Bei der Vorrichtung gemäß DE-U-7 805 616 besteht der Skigreifer aus einem im wesentlichen U-förmigen Körper, wobei die beiden Schenkel die Stützbacken bilden und die Ski zwischen sich aufnehmen. Einer dieser Schenkel bzw. Backen ist am Grundkörper gelenkig gelagert und durch eine Wendelfeder in Richtung auf den anderen Backen belastet, so daß er das Andrückstück bildet, welches die eingelegten Skier gegen den gegenüberliegenden Stützbacken drückt. Wenn keine Skier eingelegt sind, so steht der als Andrückstück ausgebildete Stützbacken mit seinem oberen Ende in der Nähe des gegenüberliegenden Stützbackens an, wodurch das Einschieben der Skier insofern erschwert ist, als das Andrückstück erst von Hand gegen die Wirkung der Feder zurückgeschwenkt werden muss, um eine genügend große Einschuböffnung bereitzustellen. Außerdem drückt der als Andrückstück ausgebildete Stützbacken im wesentlichen nur gegen die obere Kante des Skis, was zu einer verhältnismäßig kleinen Berührungsfläche zwischen diesem beweglichen Stützbacken und dem Ski führt. Die Folge hiervon ist, daß dieser Ski in seiner Längsrichtung nicht ausreichend festgehalten ist, was aber bei den hohen Beschleunigungskräften notwendig ist, die bei einer Notbremsung auftreten. Es ist deshalb immer erforderlich die beiden eingelegten Skier untereinander zu verbinden, damit auch der Ski, der an dem beweglichen Stützbacken anliegt, ausreichend in Längsrichtung gesichert ist, nachdem nur der gegenüberliegende starre Stützbacken eine große Anlagefläche aufweist und damit große Haltekräfte bei einer Beschleunigung übertragen kann. Die Ausbildung dieses Skigreifers ist auch aus Fertigungsgründen nachteilig, weil der Greifergrundkörper aus zwei Teilen besteht, die miteinander durch eine Schwenkachse verbunden sind, wobei obendrein noch eine Wendelfeder angeordnet werden muß. Es ist bereits eine Vorrichtung zum Halten von Skiern bekannt (FR-A-2 395 863), bei der Andrückringe vorgesehen sind, doch sind dort die Andrückringe einstückig mit einem Grundkörper hergestellt und bilden gleichzeitig die Schenkel des Skigreifers. Diese Ausführungsform weist den wesentlichen Mangel auf, daß die größte Verformung des Andrückringes an seinen Befestigungsstellen erfolgt, was zu sehr starken örtlichen Verformungen und damit zu starken Belastungen an diesen Stellen führt und obendrein nimmt mit zunehmender Verformung die Haltekraft entsprechend zu, was zu unterschiedlichen Haltekräften bei dünnen und dicken Skiern führt. Außerdem wird das Einlegen von dicken Skiern wegen der notwendingen größeren Verformungsarbeit erschwert. Darüber hinaus ist die symmetrisch zwischen den Befestigungspunkten des Andrückringes und durch das Zentrum des Andrückringes hindurchlaufende Hauptachse so angestellt, daß sie zwar mit der Einschubrichtung einen spitzen Winkel bildet, aber gegen diese Einschubrichtung gerichtet ist, wodurch das Einschieben des Skis schwerer möglich ist als das Herausziehen desselben. Dies ist aber nicht erwünscht, denn der Ski soll zwar zur Erhöhung des Bedienungskomforts leicht eingeschoben werden, aber soll im Skigreifer festgehalten werden, damit er sich nicht selbständig aus diesem lösen kann, insbesondere wenn starke Erschütterungen bei schlechten Straßenverhältnissen auftreten.

Aufgabe der Erfindung ist es, einen baulich einfachen Skigreifer zu schaffen, der bei einer ansprechenden äußeren Gestaltung eine leichte Bedienung sowohl beim Einlegen als auch beim Herausnehmen der Skier, große Festhaltekräfte, insbesondere in Skilängsrichtung und einen weiten Spannbereich ermöglicht.

Diese Aufgabe wird durch die Merkmale des Anspruchs 1 gelöst.

Durch diese Ausgestaltung wird der Vorteil erzielt, daß der Grundkörper des Skigreifers aus einem einzigen Teil besteht, das beispielsweise aus Kunststoff im Spritzgußverfahren herstellbar ist und somit ein einfaches Teil bildet. Zur Vervollständigung des Skigreifers ist es dann nur noch notwendig, zumindest ein Andrückstück in Form eines offenen Andrückrindes anzubringen, wofür es nur erforderlich ist, die Enden des offenen Andrückringes beispielsweise mittels Nieten, die als Gelenkachsen dienen, am Grundkörper des Skigreifers gelenkig festzulegen. Dies erfordert keinen so großen Montageaufwand wie bei dem bekannten Skigreifer, bei dem an dem Grundkörper ein Backenteil mittels einer stabilen Schwenkachse schwenkbar gelagert und eine zusätzliche Feder zur Belastung des bewegbaren Backenteiles angeordnet werden muß. Man kommt also mit einem einfach herstellbaren Grundkörper und mindestens einer leicht anzubringenden Feder in Form eines offenen Andrückringes aus. Beim Einschieben der Skier in den einseitig offenen Skigreifer wird der Andrückring, von dem mindestens einer an jedem Stützbacken vorgesehen sein kann, nach außen gedrängt, wobei er vorzugsweise in eine Ausnehmung des Stützbackens ausweicht, die der Stützbacken für die Aufnahme des Andrückringes aufweist. Bei Zuordnung von zwei Andrückringen zu einem Stützbacken können diese untereinander fluchtend angeordnet sein. Bei letzterer Ausgestaltung können die Andrückringe auch an jeweils einer Außenseite des Stützbackens angebracht sein. Durch die Verdängung des Andrückringes aus dem Aufnahmebereich des Skigreifers wird der Andrückring in sich verformt, da er mit seinen beiden offenen Enden gelenkig am Grundkörper angeordnet ist und die Gelenkstellen einen Abstand zueinander aufweisen. Diese Ausgestaltung einer Andrückfeder bzw. eines Andrückstückes hat den Vorteil, daß sehr große Öffnungsweiten des Skigreifers durch den Andrückring überbrückt werden können, wobei in jeder Lage des Ringes d. h. bei unterschiedlich dicken Ski immer ausreichend große Haltekräfte ausgeübt werden können. Da die Breite eines Andrückringes praktisch keiner Beschränkung unterliegt, kann diese so groß ausgeführt werden, daß genügend große Haltekräfte in Längsrichtung des Skis aufgebracht werden. Die Formgebung des Andrückstückes in Form eines offenen Ringes erleichtert das Einschieben der Skier trotz ausreichend großer Haltekräfte. Außerdem ist es nicht notwendig das Andrückstück mit einer Hand wegzuhalten, da durch das Einschieben der Skier, diese den Andrückring aus dem Aufnahmebereich des Skigreifers verdrängen. Somit ist der Bedienungskomfort gegenüber der bekannten Ausgestaltung wesentlich gesteigert.

Wenn in weiterer Ausgestaltung der Erfindung die symmetrisch zwischen den Anlenkpunkten des Andrückringes und durch das Zentrum des Ringes hindurchlaufende Hauptachse einen spitzen Winkel mit der Einschubrichtung einnimmt, so wird hierdurch das Einschieben der Skier erleichtert und die Festhaltekraft gegen ein Herausziehen vergrößert.

Um die Festhaltekraft in Längsrichtung zu erhöhen und dennoch die Einschubkraft nicht unnötig groß werden zu lassen, kann in weiterer Ausgestaltung der Erfindung an einem Stützbacken ein Andrückring und am gegenüberliegenden Stützbacken mindestens ein drehbar gelagerter Stützkörper vorgesehen sein, an dem der Ski in der Haltelage anliegt. Dieser Stützkörper kann als Rolle mit kreisförmigem Querschnitt oder mit polygonalem Querschnitt ausgebildet sein, wodurch das Einschieben des Skis in den Greifer erleichtert wird. Da der Stützkörper eine Länge aufweisen kann, die nahezu der Dicke des Skigreifers, in Skilängsrichtung gesehen, entspricht, so kann hierdurch eine große Anlagefläche des Skis an dem Stützkörper erzielt werden. Die Haltekraft in Längsrichtung kann noch dadurch gesteigert werden, daß in weiterer Ausgestaltung der Erfindung der Stützkörper aus einem elastischen Material mit hohem Reibwert, vorzugsweise Gummi, besteht. Da der Stützkörper drehbar gelagert ist, wird durch diese Materialwahl das Einschieben des Skis nicht erschwert, hingegen die Haltekraft in Längsrichtung des Skis, d. h. in Längsrichtung des Stützkörpers aber wesentlich erhöht.

Um das Einführen der Skier in den Skigreifer zu erleichtern, insbesondere wenn der Andrückring nicht aus einer Stahlfeder sondern aus einem Kunststoff besteht, der einen gegenüber einem Stahlring erhöhten Reibwert aufweist, kann in weiterer Ausgestaltung der Erfindung über dem Andrückring eine am Stützbacken beweglich angeordnete, an dem Andrückring anliegende, nach Art einer Weiche ausgebildete Einführhilfe für den Ski vorgesehen sein. Der Ski wird beim Einführen in den Greifer zumindest während der ersten Verformungsphase an dieser Einführhilfe entlanggeführt und nicht gegenüber dem Andrückring verschoben, so daß gerade bei einem Andrückring mit hohem Reibwert das Einschieben erleichtert wird. Außerdem kann die nach Art einer Weiche ausgebildete Einführhilfe verhältnismäßig schräg angeordnet werden, so daß das Einschieben des Skis erleichtert wird. Der Andrückring wird aus seiner Ausgangslage, in welcher er weitgehend den Aufnahmebereich im Skigreifer ausfüllt, durch diese Einführhilfe nach außen gedrängt, wenn gegen die Einführhilfe der Ski gedrückt wird.

Die Erfindung ist in der Zeichnung beispielsweise dargestellt. In dieser zeigen :

Fig. 1 eine teilweise geschnittene Ansicht eines Skigreifers nach der Erfindung ;

Fig. 2 den Skigreifer nach Fig. 1 mit eingelegten Ski ;

Fig. 3 den Skigreifer nach den Fig. 1 und 2 mit einer Zusatzeinrichtung ;

Fig. 4 eine andere Ausführungsform nach der Erfindung ; und

Fig. 5 eine weitere Ausführungsform eines Skigreifers nach der Erfindung.

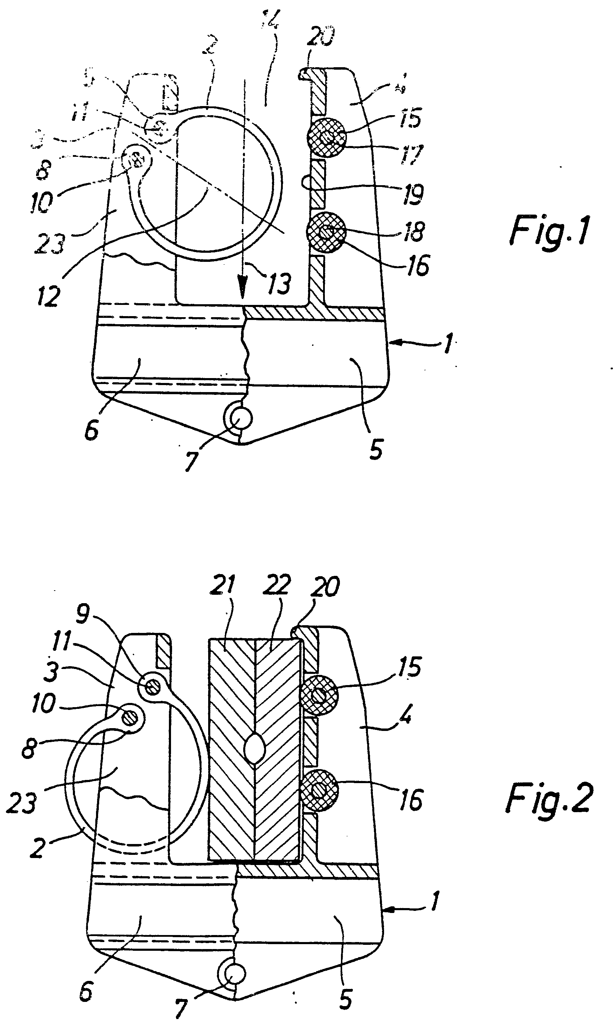

Das in den Fig. 1 und 2 dargestellte Ausführungsbeispiel eines Skigreifers weist als wesentliche Bestandteile einen Grundkörper 1 und einen Andrückring 2 auf. Der Grundkörper 1 ist U-förmig gestaltet und weist zwei Stützbacken 3,4 auf, die einstückig mit einem Basisteil 5 hergestellt sind. Das Basisteil weist eine durchlaufende Bohrung 6 auf, die zur Aufnahme einer Traverse eines Dachgepäckträgers dient. Mit 7 ist eine Bohrung bezeichnet, in die eine Klemmschraube eingeführt wird, um den Grundkörper 1 auf einem nicht dargestellten Tragteil bzw. einer Traverse eines Dachgepäckträgers festzuklemmen.

Der Andrückring 2 ist als offener Ring ausgebildet und weist an seinen Enden Befestigungsaugen 8, 9 auf, durch die als Lagerachsen dienende Nieten 10 und 11 hindurchgreifen, die den Andrückring 2 am Stützbacken 3 des Grundkörpers 1 so festlegen, daß die als Augen ausgebildeten Enden 8, 9 verschwenkbar gehalten sind. Der Andrückring 2 ist nach Art eines Seegerringes ausgebildet. Seine symmetrisch zu den Anlenkpunkten 10, 11 durch das Zentrum des Andrückringes 2 hindurchlaufende Hauptachse ist mit 12 bezeichnet und bildet mit der durch den Pfeil 13 gekennzeichneten Einschubrichtung für die Ski einen spitzen Winkel. Hierdurch hängt der Andrückring 2 ausgehend von seinen freien Enden schräg nach unten in den mit 14 bezeichneten Aufnahmebereich des Grundkörpers 1 hinein und ist dem gegenüberliegenden Stützbacken 4 so weit angenähert, daß bereits die Einführung eines einzelnen Skis eine Verformung des Andrückringes und damit ein Festklemmen dieses Ski hervorrufen würde.

Um den Ski leichter in den Skigreifer einführen zu können, ist nicht nur der Andrückring 2, wie bereits oben beschrieben, schräg angeordnet, sondern es sind in dem dem Andrückring gegenüberliegenden Stützbacken 4 drehbar gelagerte Stützkörper 15 und 16 vorgesehen, die als Rollen ausgebildet und um horizontale Drehachsen 17, 18 drehbar gelagert sind. Diese Stützkörper haben kreisförmigen Querschnitt und sind zweckmäßigerweise aus einem Werkstoff mit hohem Reibwert, vorzugsweise Gummi hergestellt, damit der Ski in seiner Längsrichtung bei starken Verzögerungen sicher im Skigreifer gehalten bleibt. Die Stützkörper 15, 16 sind innerhalb des Stützbackens 4 so weit eingelassen, daß sie nur geringfügig über die Innenfläche 19 des Stützbackens 4 hervorstehen. Am oberen Ende des Stützbackens 4 ist eine in den Aufnahmebereich 14 hineinragende Nase 20 angeformt, die zur Sicherung von eingelegten Skiern dient, wie dies insbesondere aus der Darstellung in Fig. 2 hervorgeht.

In Fig. 2 ist der Zustand des Skigreifers mit eingelegten Skiern 21, 22 dargestellt, die durch den verformten Andrückring 2 gegen die Stützkörper 15, 16 gedrückt werden, wobei der dem Stützbacken 4 benachbarte Ski 22 zum Teil durch die Nase 20 überdeckt ist, so daß ein Herausfallen dieses Skis auf Grund von Rüttelbewegungen verhindert ist. Diese Darstellung in Fig. 2 zeigt, daß der Andrückring 2 innerhalb einer Ausnehmung 23, in der er innerhalb des Stützbackens aufgenommen ist, durch die eingelegten Skier verformt ist. Bei der Verformung des Andrückringes bewegen sich die Enden des Andrückringes um die Schwenkachsen 10 und 11, wobei der Ring von seiner kreisförmigen Gestalt in eine Birnenform überführt wird. Da der Andrückring aus einem federnd nachgiebigen Material, beispielsweise Stahl oder einem speziellen Kunststoff besteht, wird durch diese Verformung genügend Federenergie gespeichert, die ausreichend ist, um die eingelegten Skier 21 und 22 in dem Greifergrundkörper 1 zu halten.

Sowohl der Andrückring 2 als auch die Stützkörper 15 und 16 sind in Längsrichten der Skier gesehen mit einer so großen Abmessung versehen, daß eine ausreichend große Haftreibung auftritt, die eine Verschiebung der Skier in Längsrichtung auch bei großen Bremsverzögerungen verhindert.

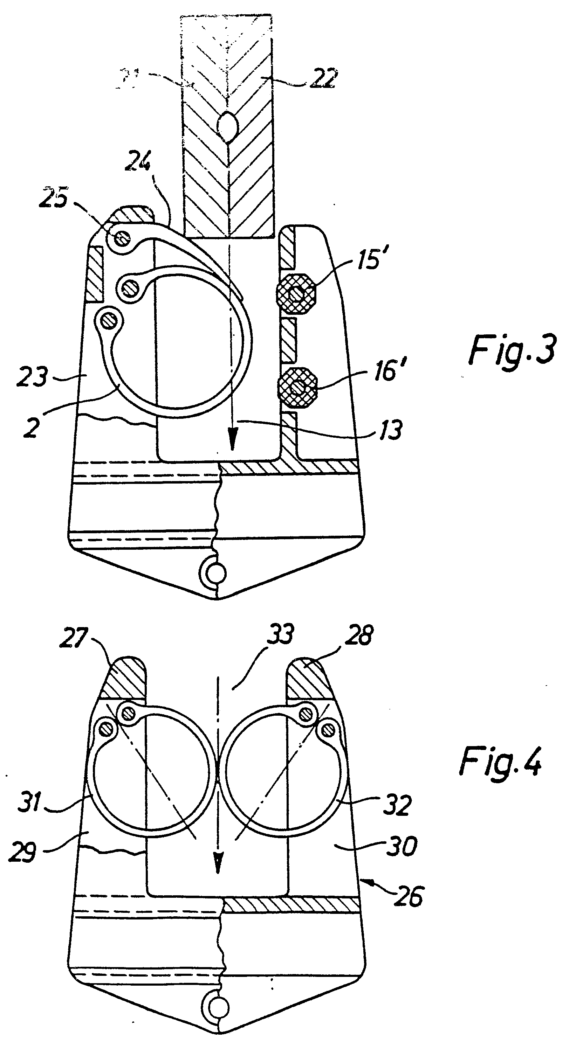

Die Ausgestaltung nach Fig. 3 zeigt zwei Abänderungen gegenüber der Ausführungsform nach den Fig. 1 und 2. Die erste Abänderung besteht in einer anderen Ausgestaltung der Stützkörper, und zwar sind bei diesem Ausführungsbeispiel Stützkörper 15' und 16' vorgesehen, die einen sechseckigen Querschnitt aufweisen, wodurch sich größere Anlageflächen zwischen Stützkörper und eingelegten Skiern ergeben. Die zweite Abänderung besteht darin, daß oberhalb des Andrückringes 2 eine schwenkbar gelagerte Einführhilfe 24 vorgesehen ist, die um eine Achse 25 innerhalb der Ausnehmung 23 gelagert und nach Art einer Weiche ausgebildet ist. Diese Einführhilfe ruht auf dem Andrückring 2 auf und wird beim Einführen der Skier 21, 22 nach unten gedrückt. Das auf dem Andrückring aufliegende Ende der Einführhilfe verformt dann den Andrückring. Da die Einführhilfe 24 bezogen auf die Einschubrichtung 13 stark geneigt ist, d. h. mit dieser Einschubrichtung einen verhältnismäßig kleinen Winkel bildet, wird das Einführen der Ski durch diese Schräge erleichtert.

In Fig. 4 ist eine andere Ausgestaltung des Skigreifers dargestellt, der im Prinzip den gleichen Grundkörper aufweist, der in dieser Fig. mit 26 bezeichnet ist. Dieser Grundkörper ist mit zwei Stützbacken 27 und 28 versehen, die mit Durchbrechungen 29 und 30 für die Aufnahme von jeweils einem Andrückring 31 und 32 versehen sind. Bei dieser Ausführungsform werden also eingelegte Skier von beiden Seiten durch Andrückringe belastet. Hierdurch ist es möglich auch einen sehr dünnen Ski sicher zu halten, da die Andrückringe 31 und 32 den Aufnahmebereich 33 des Greifers vollständig ausfüllen.

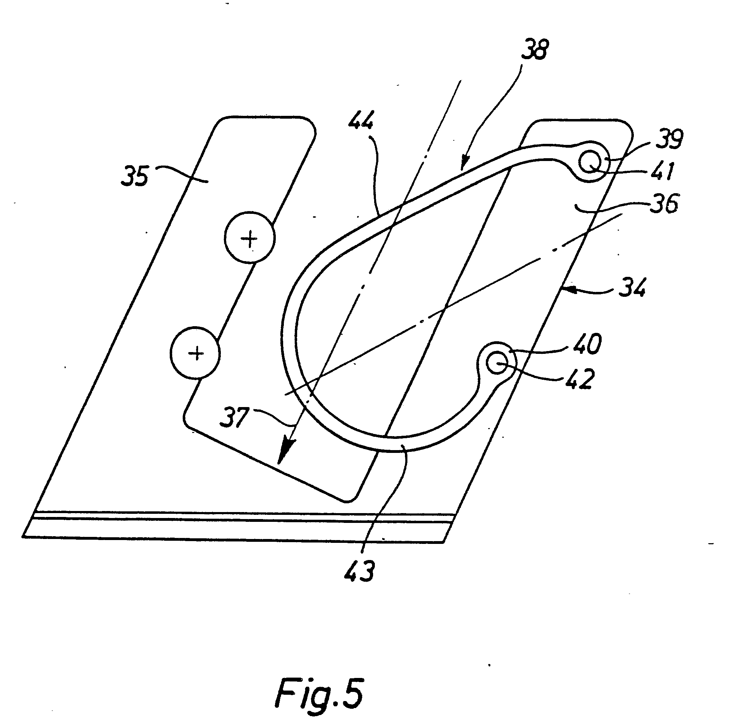

In Fig. 5 ist ein Grundkörper des Greifers dargestellt, der insgesamt mit 34 bezeichnet ist und gegenüber der Horizontalen geneigte Stützbacken 35 und 36 aufweist, so daß eingelegte Skier nicht wie bei den bisher beschriebenen Ausführungsformen hochkant stehen, sondern geneigt in dem Greifer liegen, in den sie schräg eingeführt werden, wie dies durch den Pfeil 37 gekennzeichnet ist, der die Einschubrichtung andeutet. Bei dieser Ausführungsform sind zu beiden Seiten des Stützbackens 36 jeweils ein Andrückring 38 vorgesehen, dessen freie Enden 39 und 40 μm Achsen 41 und 42 bewegbar gelagert sind. Diese Andrückringe weichen von der Kreisform ab und weisen jeweils einen unteren nahezu halbkreisförmigen Abschnitt 43 und einen oberen, im wesentlichen geradlinig ausgebildeten Abschnitt 44 auf, der als Einführschräge dient.

**Patentansprüche**

1. Vorrichtung zum Halten von Skiern auf Dachgepäckträgern von Kraftfahrzeugen, mit einem am Dachgepäckträger anzuordnenden, einseitig offenen Skigreifer, in dem die eingelegten Skier durch ein im wesentlichen quer zur Einschubrichtung der Skier elastisch wirkendes Andrückstück gehalten sind, wobei der Skigreifer aus einem im wesentlichen starren Grundkörper (1, 26, 34) mit zwei einander gegenüberliegenden Stützbacken (3, 4 ; 27, 28 ; 35, 36) besteht und das elastische Andrückstück als Andrückring (2, 31, 32 ; 38) ausgebildet ist, dadurch gekennzeichnet, daß der Andrückring aus einem elastisch federnden Material als offener Ring nach Art eines Seegerringes ausgebildet ist, dessen Enden (8, 9 ; 39 ; 40) mit Abstand zueinander jeweils gelenkig an einem Stützbacken angeordnet sind.

2. Vorrichtung nach Anspruch 1, dadurch gekennzeichnet, daß an jedem Stützbacken (3, 4 ; 27, 28 ; 35, 36) mindestens ein Andrückring (2 ;

38) vorgesehen ist.

3. Vorrichtung nach Anspruch 1 oder 2, dadurch gekennzeichnet, daß der Stützbacken (3 ; 27, 28) eine Ausnehmung (23 ; 29, 30) für die Aufnahme des Andrückringes (2 ; 31, 32) aufweist.

4. Vorrichtung nach einem der Ansprüche 1 bis 3, dadurch gekennzeichnet, daß die symmetrisch zwischen den Anlenkpunkten (10, 11 ; 41, 42) des Andrückringes und durch das Zentrum des Andrückringes (2 ; 31, 32 ; 38) hindurchlaufende Hauptachse (12) einen spitzen Winkel mit der Einschubrichtung (13) einnimmt.

5. Vorrichtung nach einem der Ansprüche 1 bis 4, dadurch gekennzeichnet, daß an einem Stützbacken (3) ein Andrückring (2) und am gegenüberliegenden Stützbacken (4) mindestens ein drehbar gelagerter Stützkörper (15) vorgesehen ist, an dem der Ski (22) in der Haltelage anliegt.

6. Vorrichtung nach Anspruch 5, dadurch gekennzeichnet, daß der Stützkörper (15) als Rolle mit kreisförmigem Querschnitt ausgebildet ist.

7. Vorrichtung nach Anspruch 5, dadurch gekennzeichnet, daß der Stützkörper (15') nach Art einer Rolle mit einem polygonalen Querschnitt ausgebildet ist.

8. Vorrichtung nach einem der Ansprüche 5 bis 7, dadurch gekennzeichnet, daß der Stützkörper (15, 16 ; 15', 16') aus einem elastischen Material mit hohem Reibwert, vorzugsweise Gummi, besteht.

9. Vorrichtung nach einem der Ansprüche 1 bis 8, dadurch gekennzeichnet, daß über dem Andrückring (2) eine am Stützbacken (3) beweglich angeordnete, an dem Andrückring anliegende, nach Art einer Weiche ausgebildete Einführhilfe (24) für den Ski vorgesehen ist.

### Claims

1. Device for holding skis on roof racks of motor vehicles, with a ski gripper open on one side and to be located on the roof rack, in which the inserted skis are held by a pressing member acting in a resilient manner substantially transverse to the insertion direction of the skis, the ski gripper consisting of a substantially rigid base member (1, 26, 34) with two opposing support jaws (3, 4 ; 27, 28 ; 35, 36) and the resilient pressing member is constructed as a pressing ring (2, 31, 32 ; 38), characterised in that the pressing ring is constructed from a resilient material as an open ring in the manner of a Seeger ring, whereof the ends (8, 9 ; 39 ; 40) are pivoted at a distance apart on one support jaw.

2. Device according to Claim 1, characterised in that at least one pressing ring (2 ; 38) is provided on each support jaw (3, 4 ; 27, 28 ; 35, 36).

3. Device according to Claim 1 or 2, characterised in that the support jaw (3 ; 27, 28) comprises a recess (23 ; 29, 30) for receiving the pressing ring (2 ; 31, 32).

4. Device according to one of Claims 1 to 3, characterised in that the main axis (12) passing symmetrically between the pivot points (10, 11 ; 41, 42) of the pressing ring and through the centre of the pressing ring (2 ; 31, 32 ; 38) encloses an acute angle with the insertion direction (13).

5. Device according to one of Claims 1 to 4, characterised in that provided on one support jaw (3) is a pressing ring (2) and on the opposite support jaw (4) at least one support member (15) which is mounted to rotate, against which the ski (22) bears in the retained position.

6. Device according to Claim 5, characterised in that the support member (15) is constructed as a roller with a circular cross-section.

7. Device according to Claim 5, characterised in that the support member (15') is constructed in the manner of a roller with a polygonal cross-section.

8. Device according to one of Claims 5 to 7, characterised in that the support member (15, 16 ; 15', 16') consists of a resilient material with a high coefficient of friction, preferably rubber.

9. Device according to one of Claims 1 to 8, characterised in that an introduction aid (24) for the ski constructed in the manner of a deflector, arranged to move on the support jaw (3) and bearing against the pressing ring is provided above the pressing ring (2).

### Revendications

1. Dispositif pour maintenir des skis sur les porte-bagages de toit des véhicules automobiles, comprenant une pince à skis qui est ouverte d'un côté et montée sur le porte-bagages de toit, et dans laquelle les skis qui y sont introduits sont maintenus par une pièce de serrage agissant de manière élastique et, pour l'essentiel, perpendiculairement à la direction d'enfoncement des skis, la pince à skis se composant d'un corps de base (1, 26, 34) pour l'essentiel rigide comprenant deux mâchoires d'appui (3, 4 ; 27, 28 ; 35, 36) se faisant face, et la pièce de serrage élastique étant réalisée sous la forme d'un anneau de serrage (2, 31, 32 ; 38), caractérisé par le fait que l'anneau de serrage est réalisé en une matière élastiquement résiliente sous la forme d'un anneau ouvert à la manière d'un anneau de retenue du type Seeger dont chaque extrémité (8, 9 ; 39 ; 40) est montée articulée sur une mâchoire d'appui à distance de l'autre.

2. Dispositif selon la revendication 1, caractérisé par le fait qu'au moins un anneau de serrage (2 ; 38) est prévu sur chaque mâchoire d'appui (3, 4 ; 27, 28 ; 35, 36).

3. Dispositif selon la revendication 1 ou 2, caractérisé par le fait que la mâchoire d'appui (3 ; 27, 28) présente un évidement (23 ; 29, 30) pour recevoir l'anneau de serrage (2 ; 31, 32).

4. Dispositif selon l'une des revendications 1 à 3, caractérisé par le fait que l'axe principal (12) qui passe symétriquement entre les points d'articulation (10, 11 ; 41, 42) de l'anneau de serrage et par le centre de l'anneau de serrage (2 ; 31, 32 ;

38) forme un angle aigu avec la direction d'enfoncement (13).

5. Dispositif selon l'une des revendications 1 à 4, caractérisé par le fait qu'il est prévu un anneau de serrage (2) sur une mâchoire (3) et, sur la mâchoire (4) lui faisant face, au moins un organe d'appui (15) monté tournant sur lequel le ski (22) repose dans sa position de maintien.

6. Dispositif selon la revendication 5, caractérisé par le fait que l'organe d'appui (15) est réalisé sous la forme d'un rouleau à section circulaire.

7. Dispositif selon la revendication 5, caractérisé par le fait que l'organe d'appui (15') est réalisé à la manière d'un rouleau à section polygonale.

8. Dispositif selon l'une des revendications 5 à 7, caractérisé par le fait que l'organe d'appui (15, 16 ; 15', 16') est constitué en une matière élastique à coefficient de frottement élevé, et de préférence en caoutchouc.

9. Dispositif selon l'une des revendications 1 à 8, caractérisé par le fait qu'il est prévu au-dessus de l'anneau de serrage (2) un organe (24) facilitant l'introduction du ski qui est monté mobile sur la mâchoire (3), qui s'appuie sur l'anneau de serrage et qui est réalisé à la manière d'une lame d'aiguillage.

Fig.1

Fig.2

Fig.3

Fig.4

2

Fig.5